# EUROPEAN PATENT SPECIFICATION

(11) **EP 1 546 257 B1**
(45) Date of publication and mention of the grant of the patent: **31.10.2007**
(21) Application number: 03793360.3
(22) Date of filing: 26.08.2003
(51) Int. Cl.: C08L 81/06, C08K 3/40, C08L 69/00, C08L 71/00

(54) **AROMATIC POLYCONDENSATION POLYMER COMPOSITIONS EXHIBITING ENHANCED STRENGTH PROPERTIES**
AROMATISCHES POLYKONDENSAT ENTHALTENDE ZUSAMMENSETZUNGEN MIT VERBESSERTEN FESTIGKEITSEIGENSCHAFTEN
COMPOSITIONS AROMATIQUE DE POLYMERE PAR POLYCONDENSATION PRESENTANT DES PROPRIETES DE RESISTANCE RENFORCEES

(30) Priority: 26.08.2002 US 405745 P
(43) Date of publication of application: 29.06.2005
(73) Proprietor: Solvay Advanced Polymers, L.L.C., Alpharetta, GA 30005-3914 (US)
(72) Inventor: EL-HIBRI, Jamal, M., Atlanta, GA 30328 (US)
(74) Representative: Jacques, Philippe
(86) International application number: PCT/US2003/026497
(87) International publication number: WO 2004/018542

(56) References cited:
- US-A- 4 798 855
- US-A- 5 344 868
- DATABASE WPI Section Ch, Week 199231 Derwent Publications Ltd., London, GB; Class A28, AN 1992-256554 XP002264025 -& JP 04 175374 A (DAINIPPON INK & CHEM KK), 23 June 1992 (1992-06-23)

## Description

### CROSS REFERENCE TO PROVISIONAL APPLICATIONS

This application claims priority from U.S. provisional patent application Serial No. 60/405,745; filed August 26, 2002, the entire disclosure of which is incorporated herein by reference.

### TECHNICAL FIELD

This invention is directed to glass-reinforced aromatic polycondensation polymer compositions exhibiting enhanced strength properties, such as increased tensile and flexural strength, and elongation and impact properties.

### BACKGROUND OF THE INVENTION

In many applications polymers that are capable of withstanding elevated temperatures, and that have good strength, heat resistance, and tolerance to a host of chemical environments are required. For many applications it is desirable to enhance the tensile strength, stiffness, creep resistance, and chemical resistance. One of the common ways to meet the needs of more demanding uses is through the addition of glass reinforcement, such as fiberglass, to polymer compositions. It has long been recognized, however, that the tensile strength of these reinforced compositions suffers from a lack of good adhesion between the fiberglass surface and the polymer resin matrix. This lack of good resin matrix/glass fiber adhesion causes the strength, elongation, and impact resistance properties of the reinforced compound to be less than what they could be under more optimal resin/glass adhesion conditions.

Many aromatic polycondensation polymers provide high temperature service, high strength, and chemical resistance. Aromatic polycondensation polymers are polymers formed by the condensation reaction of two different compounds, wherein at least one of the compounds comprises at least one aromatic group, to form chains of alternating chemical groups.

Sulfone polymers are amorphous aromatic polycondensation polymers that are capable of withstanding long-term exposure to elevated temperatures, which offer many attractive features including good strength, heat resistance, and tolerance to a host of chemical environments. Sulfone polymers are high performance thermoplastic engineering resins that contain the characteristic diarylsulfone linkage. Sulfone polymers are known for their high mechanical strength, thermal and oxidative resistance, resistance to hydrolysis, and to many acids, bases, and solvents. Commercially important sulfone polymers include polyarylethersulfones, such as polysulfone (PSU), polyphenylsulfene (PPSU), and polyethersulfone (PES).

Polysulfone is a well-known high temperature amorphous engineering thermoplastic resin. It exhibits a high glass transition temperature of about 185 °C, high strength, stiffness and toughness over a temperature range from about -100 to 150 °C. Being completely amorphous, the polymer also exhibits transparency, which adds to its utility in many end uses. Polysulfone was commercially introduced in 1965 by the Union Carbide Corporation. It has the chemical structure:

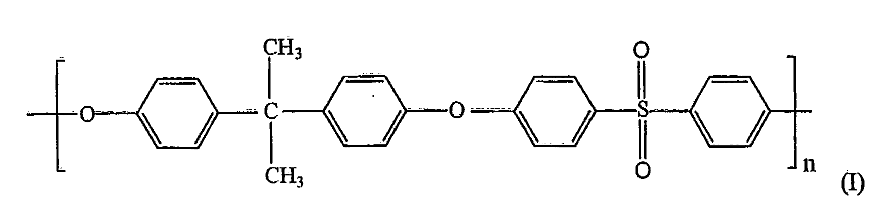

Polysulfone is commercially available as UDEL^{®} polysulfone from Solvay Advanced Polymers, LLC. PSU is probably the most commercially important member of a broad family of aromatic backbone polymers known as polyarylethers. These polymers can be produced by a variety of methods. For example U.S. Pat. Nos. 4,108,837 and 4,175,175 describe the preparation of polyarylethers and in particular polyarylethersulfones, which patents are incorporated herein by reference in their entireties.

Another versatile polyarylethersulfone polymer is polyphenylsulfone (PPSU). PPSU is commercially available from Solvay Advanced Polymers, LLC, under the trademark of RADEL^{®} R. It corresponds to the following formula: 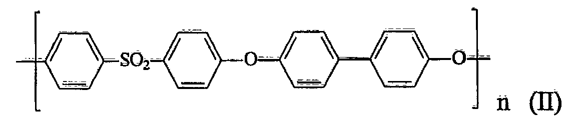 and has a Tg of about 220° C.

Polyethersulfone (PES) is another polyarylethersulfone that is commercially available from several sources, for example, from Solvay Advanced Polymers, LLC, as RADEL^{®} A, from BASF as ULTRASON^{®} E, and from Sumitomo Chemical as SUMIKAEXCEL^{®}. It has the following formula: 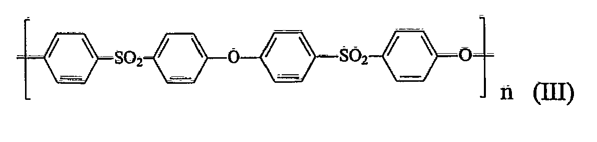 and has a Tg of approximately 220 °C. Processes for producing PPSU and PES are described in Canadian Patent No. 847,963, which patent is incorporated herein by reference in its entirety.

The average number of repeat units, n, per polymer chain of the above polymers is generally greater than 30 and more typically greater than about 40 to ensure sufficiently high molecular weight for robust physical and mechanical integrity of the polymers when fabricated into structural components.

Lausberg et al., U.S. Patent No. 4,798,855, disclose thermoplastic molding materials comprising polyarylethersulfone, polyamide, polymer having hydroxyl groups, rubber impact modifier, and reinforcing fillers. The aromatic polycondensation polymer compositions of U.S. Patent No. 4,798,855 require at least 2 % by weight of polyamide.

Kawabata et al., U.S. Patent No. 4,960,841, disclose block copolymers composed of polyphenylene sulfide and polyphenylene sulfide sulfone, reinforcing filler, and an optional additional polymer. The compositions of U.S. Patent No. 4,960,841 require a polyphenylene sulfide/polyphenylene sulfide sulfone block copolymer.

### SUMMARY OF THE INVENTION

There exists a need in the glass-reinforced polymer composition art for a polymer composition with enhanced strength properties, such as enhanced tensile and flexural strength and elongation and impact properties. There exists a need in the glass-reinforced polymer art for improved polymer matrix/glass fiber adhesion. There exists a need for a glass-reinforced polymer, capable of withstanding extended exposure to high temperatures, with improved strength properties. There further exists a need in the glass-reinforced polymer composition art for a method of improving the strength of glass-reinforced polymer compositions. In addition, there exists a need for articles formed from glass-reinforced polymers with increased strength properties.

These and other needs are met by certain embodiments of the present invention, that provide a polymer composition comprising, as the sole polymer components, at least one aromatic polycondensation polymer comprising sulfone, ketone, imide, or carbonate groups, and at least one phenoxy polymer, and glass.

The earlier stated needs are also met by a polymer composition comprising at least one aromatic polycondensation polymer comprising sulfone, ketone, imide, or carbonate groups, at least one phenoxy polymer, and glass. The polymer composition is substantially free of polyamide.

The earlier stated needs are further met by melt fabricated, injection molded, blow molded, thermoformed, and extruded articles formed from a polymer composition comprising, as the sole polymer components, at least one aromatic polycondensation polymer comprising sulfone, ketone, imide, or carbonate groups, and at least one phenoxy polymer, and glass.

The earlier stated needs are further met by melt fabricated, injection molded, blow molded, thermoformed, and extruded articles formed from a polymer composition comprising at least one aromatic polycondensation polymer comprising sulfone, ketone, imide, or carbonate groups, at least one phenoxy polymer, and glass. The polymer composition is substantially free of polyamide.

In addition, the earlier stated needs are further met by certain embodiments of the present invention that provide a method of increasing the strength properties of glass-reinforced polymer compositions comprising the step of blending at least one phenoxy polymer with at least one aromatic polycondensation polymer comprising sulfone, ketone, imide, or carbonate groups and glass. The phenoxy polymer and the aromatic polycondensation polymer are the sole polymer components of the composition.

The earlier stated needs are also met by certain embodiments of the present invention that provide a method of increasing the strength properties of polymer compositions comprising the step of blending at least one phenoxy polymer with at least one aromatic polycondensation polymer comprising sulfone, ketone, imide, or carbonate groups and glass. The polymer composition is substantially free of polyamide.

Furthermore, the earlier stated needs are met by certain embodiments of the present invention that provide a method of forming a molded article comprising the use of a polymer composition comprising at least one aromatic polycondensation polymer comprising sulfone, ketone, imide, or carbonate groups, at least one phenoxy polymer, and glass. The at least one aromatic polycondensation polymer and the at least one phenoxy polymer are the sole polymers in the composition.

In addition, the earlier stated needs are met by certain embodiments of the present invention that provide a method of forming a molded article comprising the use of a polymer composition comprising at least one aromatic polycondensation polymer comprising sulfone, ketone, imide, or carbonate groups, at least one phenoxy polymer, and glass. The polymer composition is substantially free of polyamide.

The instant invention addresses the longstanding limitation of insufficient adhesion between the polymer matrix and glass fibers in glass-reinforced amorphous polymer compositions.

Additional advantages and aspects of the present invention will become readily apparent to those skilled in the art from the following detailed description, wherein embodiments of the present invention are shown and described, by way of illustration of the best mode contemplated for practicing the present invention. As will be described, the present invention is capable of other and different embodiments, and its several details are susceptible to modification in various obvious respects, all without departing from the spirit of the present invention. Accordingly, the description is to be regarded as illustrative in nature, and not as limitative.

### DETAILED DESCRIPTION OF THE INVENTION

The present invention addresses this deficiency in strength of glass-reinforced polymer compositions. This has been accomplished by the incorporation of at least one phenoxy polymer as a minor component in glass-reinforced polymer compositions. The concentration of the at least one phenoxy polymer in the polymer composition is from about 1 weight % to about 30 weight % of the total composition weight. In certain embodiments of the present invention, the concentration of the at least one phenoxy resin to impart a dramatic enhancement in tensile and flexural strength and in elongation and impact properties is from about 2 weight % to about 15 weight %.

In certain embodiments of the present invention, unexpectedly large increases in the tensile and flexural strength relative to unmodified compounds were obtained. For example, increases of about 25% and about 35% were observed in tensile strength and flexural strength, respectively. Improvements in impact resistance properties were also quite substantial, in most cases the phenoxy-modified compositions exhibited double the impact resistance values or more relative to unmodified analogs. As an additional benefit, the flow properties of the phenoxy polymer-containing compositions are also superior to their unmodified counterparts.

Certain embodiments of this invention relate to glass fiber-reinforced polyarylethersulfone compositions exhibiting higher tensile and flexural strength properties than what is possible with the state of the art. Mechanical properties are enhanced by the incorporation of from about 1 % to about 30 % by weight phenoxy polymer into a glass fiber-reinforced polyarylethersulfone formulation. In certain embodiments of the present invention, from about 2 % to about 15 % by weight phenoxy polymer is incorporated into polymer composition.

The compositions of the present invention are prepared by conventional reinforced polymer composition melt compounding techniques using an extruder, preferably a twin-screw extruder. The phenoxy polymer modified glass-reinforced formulations exhibit higher tensile strengths and elongations, higher flexural strengths and flexural strains to rupture, as well as higher impact properties compared with formulations that are not modified according to this invention. The melt viscosities of the formulations from this invention are also lower than those of unmodified materials, thereby allowing greater processing ease and wider latitude in fabrication and part design.

In certain embodiments of the present invention, the phenoxy polymers utilized are high molecular weight thermoplastic polymers that are produced from a bisphenol, such as bisphenol A, or other aromatic dihydroxy compound such as hydroquinone, and epichlorohydrin. The basic chemical structure of the phenoxy polymer is similar to that of epoxy polymers. They are, however, a separate and unique polymer class, differing from epoxies in several important characteristics:
1. Phenoxy polymers are tough and ductile thermoplastics. Their average molecular weight is greater than conventional epoxies which cross link on polymerization.
2. Phenoxy polymers do not have terminal highly reactive epoxy groups and are thermally stable materials with a long shelf life.
3. The phenoxy polymers can be used without further chemical conversion. They require no catalysts, curing agents or hardeners to be useful products while epoxy polymers require catalysts, curing agents or hardeners to be useful.

A phenoxy polymer used in certain embodiments of the present invention comprises the 4,4'-isopropylidenediphenol (bisphenol A) phenoxy repeat structure illustrated below:

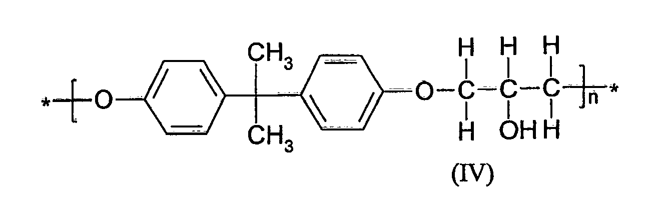

The terminal structure is completed with hydrogen atoms or suitable end capping groups. Bisphenol A phenoxy polymer is commercially available as PHENOXY PKFE^{™} from InChem Corporation.

This invention is not limited to the exemplified embodiments. In certain embodiments, phenoxy polymers based on bisphenols other than bisphenol A can be used. For example, other bisphenol compounds that can be used to form phenoxy polymers included within the scope of this invention include: dihydroxydiphenyl, bis-(hydroxyphenyl)alkanes, bis-(hydroxyphenyl)cycloalkanes, bis-(hydroxyphenyl)sulfide, bis-(hydroxyphenyl)ketone, bis-(hydroxyphenyl)ether, bis-(hydroxyphenyl)sulfoxide, bis-(hydroxyphenyl)sulfone and a,a'-bis-(hydroxyphenyl)diisopropylbenzene, and derivatives thereof resulting from substitution of alkyl or halogen at the ring. Specific examples of suitable bisphenols include 4,4'-dihydroxydiphenylether, 4,4'-dihydroxyphenylsulfone, and 4,4'-dihydroxybenzophenone, 2,4-bis-(4-hydroxyphenyl)-2-methylbutane, 1,1-bis-(4-hydroxyphenyl)cyclohexane, α,α'-bis-(4-hydroxyphenyl)-p-diisopropylbenzene, 2,2-bis-(3-methyl-4-hydroxyphenyl)propane, 2,2-bis-(3-chloro-4-hydroxyphenyl)propane, bis-(3,5-dimethyl-4-hydroxyphenyl)methane, 2,2-bis-(3,5-dimethyl-4-hydroxyphenyl)propane, bis-(3,5-dimethyl-4-hydroxyphenyl)sulfone, 2,4-bis-(3,5-dimethyl-4-hydroxyphenyl)-2-mercaptan, 1,1-bis-(3,5-dimethyl-4-hydroxyphenyl)cyclohexane, α,α'-bis-(3,5-dimethyl-4-hydroxyphenyl)-p-diisopropylbenzene, 2,2-bis-(3,5-dichloro-4-hydroxyphenyl)propane and 2,2-bis-(3,5-dibromo-4-hydroxyphenyl)propane.

Certain embodiments of the present invention comprise 4,4'-isopropylidenediphenol phenoxy polymer, 4,4'-dihydroxydiphenylether phenoxy polymer, 4,4'-dihydroxyphenylsulfone phenoxy polymer, and 4,4'-dihydroxybenzophenone phenoxy polymer.

The aromatic polycondensation polymer can be a sulfone polymer, copolymer, or blend of sulfone polymers according to certain embodiments of this invention. The sulfone polymers used in certain embodiments of this invention are polyarylethersulfones, defined as a polyarylene compound in which arylene units exist irregularly or regularly together with ether and sulfone linkages. Examples of polyarylethersulfones within the scope of the present invention are polymers comprising the following structural formulae (1) to (16) where n is an integer of at least 10:

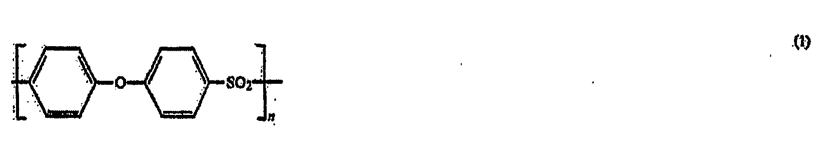

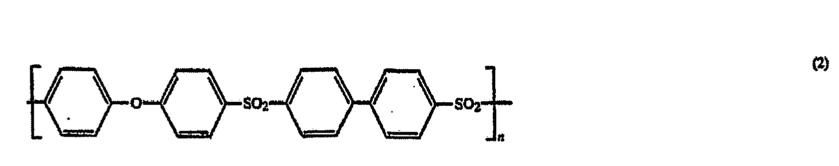

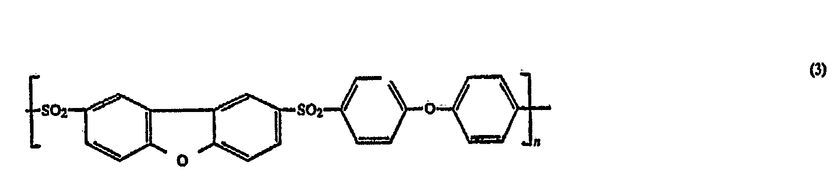

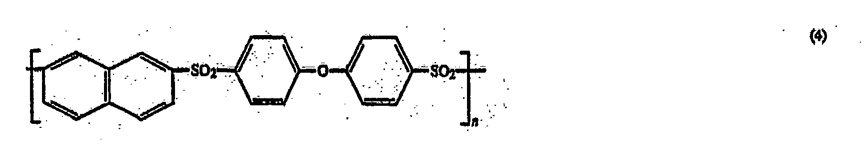

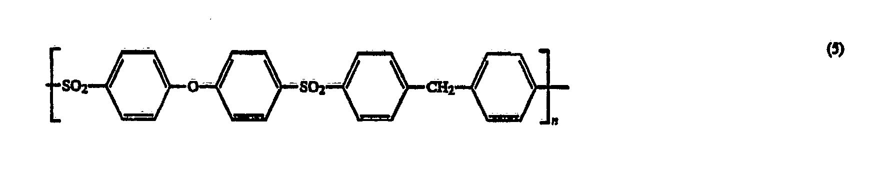

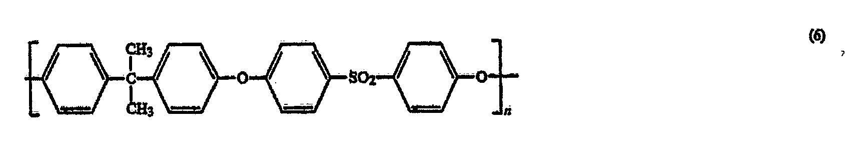

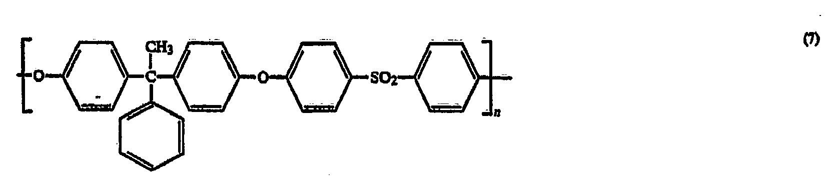

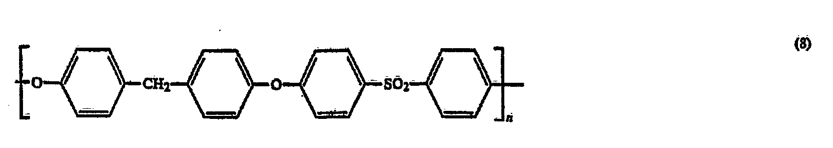

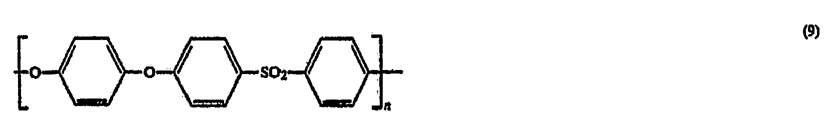

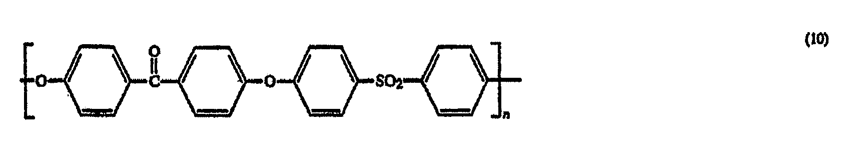

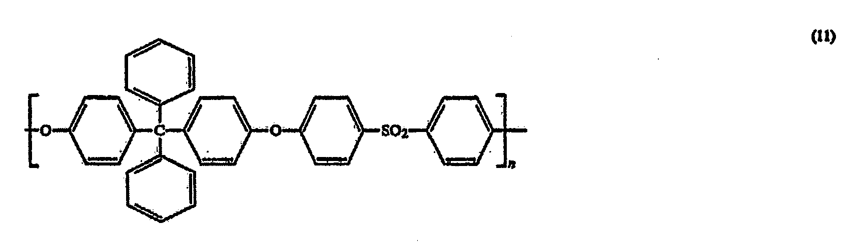

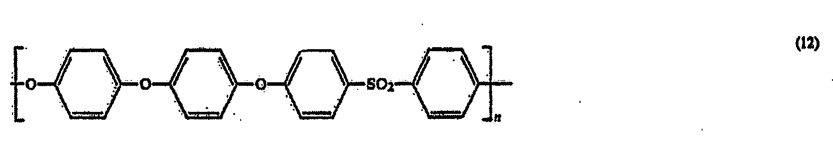

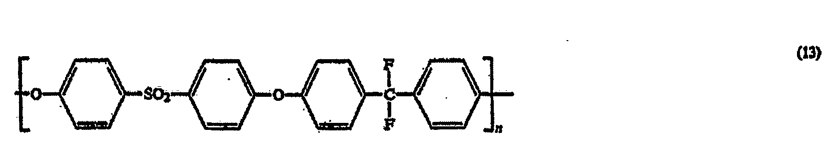

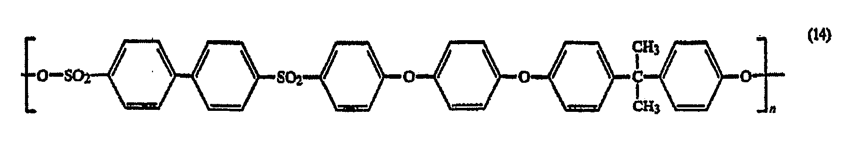

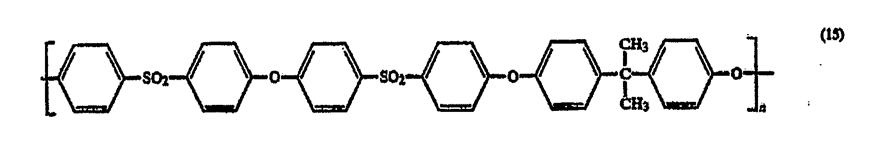

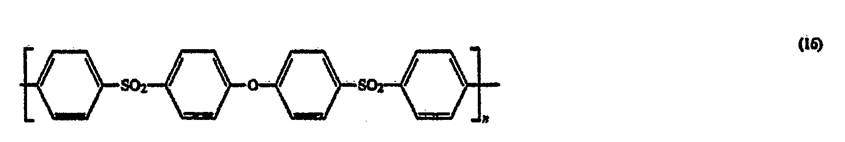

In certain embodiments of the present invention, the polyarylethersulfone may preferably comprise polysulfone, polyphenylsulfone, polyethersulfone, polyetherethersulfone, or copolymers and mixtures thereof. In certain embodiments of the present invention, the polyarylethersulfone is polysulfone. The structural repeat units of polysulfone, polyphenylsulfone, polyethersulfone, and polyetherethersulfone are listed below: 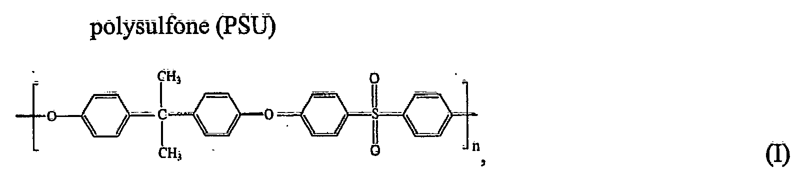 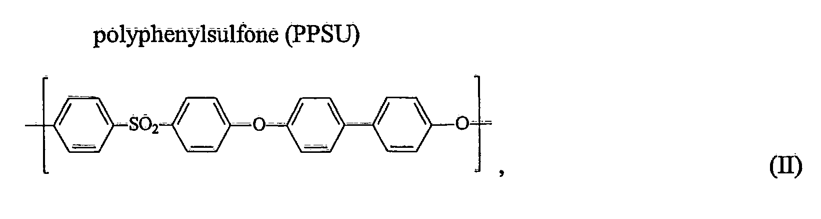 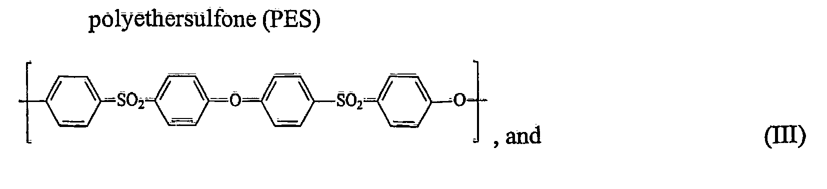 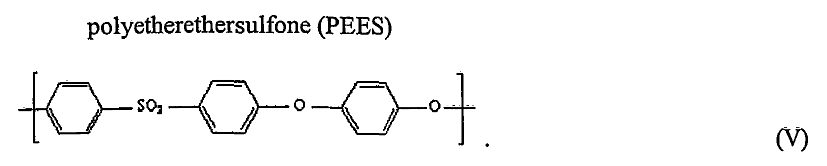 Certain copolymers suitable for use in this invention, include a polyethersulfone/polyetherethersulfone copolymer formed by the polycondensation of 4,4'-dihalodiphenylsulfone (typically 4,4'-dichlorodiphenylsulfone), 4,4'-dihydroxydiphenylsulfone and hydroquinone.

In addition to polyarylethersulfones, other aromatic polycondensation polymers capable of withstanding extended exposure to high temperature, such as polyaryletherketones, polycarbonates (PC), and polyetherimides (PEI), and copolymers and mixtures thereof, are included within the scope of this invention. An example of a polyaryletherketone included within the scope of this invention is polyetheretherketone (PEEK). PEEK comprises polymers formed the following structural unit:

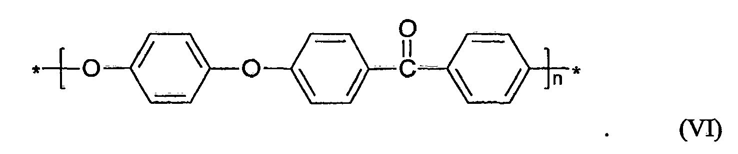

PEEK is commercially available as VICTREX^{®} from Victrex, LTD.

Certain other embodiments of the present invention may include a polymer composition comprising a polyetherimide or a polycarbonate. The polyetherimide may be obtained by reacting an aromatic bis(ether acid anhydride) with an organic diamine as described in U.S. Patents No. 4,960,841; 4,017,511; 3,887,588; and 3,833,544; which are incorporated herein by reference in their entireties. The polyetherimides include polymers produced from the polycondensation of 4,4'-isopropylidenediphenol dianhydride with meta- or para-phenylene diamine. Other polyetherimides include polycondensation products of 4,4'-isopropylidenediphenol dianhydride and aromatic diamines other than meta- or para-phenylene diamine. Polyetherimides are commercially available as ULTEM^{®} resins from General Electric.

Certain embodiments of the present invention comprise polycarbonates based on the aforesaid bisphenols. In certain embodiments of the present invention the polycarbonate copolymers are copolymers of 4,4'-isopropylidenediphenol and another of the other aforesaid bisphenols. In certain other embodiments of the present invention the polycarbonates are based only on 4,4'-isopropylidenediphenol or 2,2-bis-(3,5-dimethyl-4-hydroxyphenyl)propane. Polycarbonate is commercially available as LEXAN^{®} from General Electric.

Polymer compositions according to certain embodiments of the present invention are substantially free of polyamide. Certain embodiments of the present invention do not contain polyamide. Certain embodiments of the present invention are substantially free of block copolymers comprising polyphenylene sulfide. Certain embodiments of the present do not contain block copolymers comprising polyphenylene sulfide blocks. In certain embodiments of the present invention an aromatic polycondensation polymer comprising sulfone, ketone, imide, or carbonate groups and a phenoxy polymer are the sole polymer components of the polymer composition.

The concentration of glass in certain embodiments of the present invention ranges from about 1 weight % to about 80 weight % based on the total weight of the polymer composition. In certain embodiments of the present invention, the polymer composition comprises from about 10 weight % to about 50 weight % glass.

In certain embodiments of the present invention, the glass is a glass fiber. Glass fibers are commercially available in continuous filament, chopped, and milled forms. Any of these forms of glass fiber can be used in the practice of this invention. A suitable glass fiber for embodiments of this invention is CERTAINTEED^{®} 910 fiberglass, available from Vetrotex CertainTeed Corp.

The invention will be further described by several examples. The examples are illustrative of the present invention and do not limit the scope of the claimed invention.

### Control 1 and Examples 1 and 2

The compositions of two polysulfone compositions with the phenoxy polymer additive (Examples 1 and 2) and a polysulfone composition without the phenoxy polymer additive (Control 1) are listed in Table 1. UDEL^{®}, the polysulfone used in the compositions of the examples, controls, and comparative example in this disclosure has a melt flow of about 30 dg/min as measured per ASTM method D1238 at a temperature of 343 °C and using a weight of 2.16 kg. Polysulfone with other melt flow values can be used equally effectively in the practice of this invention. Polysulfone is available commercially from a number of sources in the melt flow range of from about 2 dg/min to about 40 dg/min as measured according the above mentioned method and conditions.

**Table 1**

| Compositions of Examples 1 and 2 and Control 1. | | | |
|---|---|---|---|
| Components | Control 1 | Example 1 | Example 2 |
| UDEL^{®} Polysulfone (wt. %) | 62.0 | 59.5 | 57.0 |
| CERTAINTEED^{®} 910 Chopped Fiberglass (wt. %) | 34.9 | 34.9 | 34.9 |
| KADOX^{®} 911 Zinc Oxide (wt. %) | 0.9 | 0.9 | 0.9 |
| POLYMIST^{®} 5A PTFE Powder (wt. %) | 2.0 | 2.0 | 2.0 |
| RAVEN^{®} 3500 Carbon Black (wt. %) | 0.2 | 0.2 | 0.2 |
| PHENOXY PKFE^{™} Bisphenol A-PhenoxyPolymer (wt. %) | 0 | 2.5 | 5.0 |
| Total | 100.0 | 100.0 | 100.0 |

The compositions shown in Table 1 were prepared by dry blending the ingredients except for the chopped fiberglass then feeding these ingredients gravimetrically to the hopper of a ZSK-40 Werner-Pfleiderer twelve barrel twin-screw compounding extruder. The fiberglass was side-fed at barrel 7 using a gravimetric feeder and was metered at the appropriate rate to achieve the target fiberglass loading of 34.9 wt.%. Compounding was performed using barrel temperature settings of 330-345 °C, a die temperature of 345 °C and a screw speed of 300 RPM. Each of the compounds was produced at a total throughput rate of 225 lb/hr. Vacuum venting of the extruder was provided at barrel 6 to allow for removal of moisture and other trace volatiles evolved at the elevated compounding temperatures. The extruder was fitted with a four-hole die, each hole being 3 mm in diameter and the formed molten strands were cooled in a water bath then cut in a pelletizer to form good quality pellets. The pellets from the Control and each of Examples 1 and 2 were then dried overnight in a desiccated air oven operated at about 150 °C. The dried resin pellets of each formulation were then injection molded using a 125-ton Battenfeld injection molding machine using a melt temperature of about 360 °C and a mold temperature of about 125 °C to produce 0.125 inch-thick ASTM test parts. The ASTM test parts molded included Type 1 tensile bars, flexural/IzodIHDT bars, and 4 inch x 4 inch plaques. The test methods employed in elucidating the physical and mechanical characteristics of all the various polymer compositions of this invention are listed in Table 2.

**Table 2**

| Test methods used in mechanical property evaluations | | |
|---|---|---|
| Property | Units | Method |
| Tensile Strength | psi | D638 |
| Tensile Modulus | Ksi | D638 |
| Tensile Elongation | % | D638 |
| Flexural Modulus | Ksi | D790 |
| Flexural Strength at Break | psi | D790 |
| Flexural Strain (Elongation) at Break | % | D790 |
| Izod, Notched | ft-lb/in | D256 |
| Izod, Unnotched | ft-lb/in | D256 |
| Dynatup Instrumented Impact - Max. Load | lb | D3763 |
| Dynatup Instrumented Impact - Total Energy | ft-lb | D3763 |
| Heat Deflection Temperature (HDT) [264 psi] | °C | D648 |

Results from mechanical property testing on these formulations are shown in Table 3. Of particular interest were tensile and flexural strength values, elongation, and impact properties of the different materials.

**Table 3**

| Mechanical properties of Examples 1 and 2 compared to Control 1. | | | |
|---|---|---|---|
| | Control 1 | Example 1 | Example 2 |
| Weight % Phenoxy Polymer Used in Formulation | 0 | 2.5 | 5.0 |

| Properties | | | |
|---|---|---|---|
| Tensile Strength (psi) | 15,800 | 18,300 | 19,300 |
| Tensile Modulus (Ksi) | 1,470 | 1,530 | 1,520 |
| Tensile Elongation at Break (%) | 1.5 | 1.8 | 1.9 |
| Flexural Strength (psi) | 20,600 | 26,100 | 27,900 |
| Flexural Modulus (Ksi) | 1,380 | 1,380 | 1,450 |
| Flexural Strain at Break (%) | 1.7 | 2.1 | 2.2 |
| Dynatup Instrumented Impact, Max. Load (lb) | 112 | 232 | 245 |
| Dynatup Instrumented Impact, Total Energy (ft-lb) | 1.5 | 4.1 | 4.5 |
| Notched Izod (ft-lb/in) | 1.1 | 1.7 | 1.7 |
| Unnotched Izod (ft-1b/in) | 3.9 | 11.6 | 10.8 |
| Heat Deflection Temperature (°C) | 182 | 177 | 168 |

As can be seen from the mechanical property test results in Table 3, there is a substantial improvement in tensile and flexural properties, as well as impact properties, in formulations prepared according to this invention as compared with the control. Increases of about 22% in tensile strength and 35% in flexural strength are observed with the incorporation of 5% bisphenol A phenoxy polymer into the glass-filled polysulfone composition. Increases in elongation also accompany the increases in strength and reflect increased polymer composition ductility and toughness. Surprisingly, significant improvements are seen with a phenoxy addition level as low as 2.5 wt. %, as the data of Example 2 illustrate. The improvements in impact properties are even more dramatic, with the impact properties of Examples 1 and 2 being two to three times that of Control 1 by the various measures impact resistance techniques employed. Furthermore, marked improvements in impact resistance are surprisingly realized with only 2.5% by weight of the phenoxy polymer additive, as shown by Example 1. The material modulus, which is a measure of stiffness, is not affected by the addition of the phenoxy polymer, while the heat deflection temperatures are slightly reduced due to the relatively low glass transition temperature, of about 100 °C, for the bisphenol A phenoxy polymer.

### Example 3 and Comparative Example 1

The addition of bisphenol A phenoxy polymer to a glass-reinforced polysulfone composition is contrasted with the addition of polyphenylene oxide (PPO) as shown in Table 4. Two similar compositions were prepared, each containing either 10 wt. % PHENOXY PKFETM (Example 3) or 10 wt. % of NORYL^{®} PX-1390 (Comparative Example 1). NORYL^{®} PX-1390 is a PPO/polystyrene blend comprised predominantly of PPO and is available commercially from General Electric. These two formulations were compounded using a 25 mm Berstorff twin screw extruder. The compositions of the two formulations are given in Table 4, while detailed compounding conditions are provided in Table 5. After compounding, the two formulations were molded and tested according to procedures similar to those employed for Control 1 and Examples 1 and 2. The mechanical property test data for these two formulations are shown in Table 6.

**Table 4**

| Compositions of Example 3 and Comparative Example 1. | | |
|---|---|---|
| Components | Example 3 | Comparative Example 1 |
| UDEL^{®} Polysulfone (wt. %) | 59.75 | 59.75 |
| CERTAINTEED^{®} 910 Chopped Fiberglass (wt.%) | 30.0 | 30.0 |
| KADOX^{®} 911 Zinc Oxide (wt. %) | 0.25 | 0.25 |
| PHENOXY PKFE^{™} Bisphenol A Phenoxy Polymer (wt. %) | 10.0 | |
| NORYL^{®} PX-1390 Polyphenylene oxide/polystyrene (wt. %) | --- | 10.0 |
| Total | 100.0 | 100.0 |

**Table 5**

| Compounding Conditions of Example 3 and Comparative Example 1 | | | | |
|---|---|---|---|---|
| | Example 3 | | Comparative Example 1 | |
| Wt. % Phenoxy Polymer Used in Formulation | 10.0 | | 0 | |

| | Set | Actual | Set | Actual |
|---|---|---|---|---|
| Zone 1 Temperature (°C) | 310 | 305 | 310 | 307 |
| Zone 2 Temperature (°C) | 345 | 342 | 345 | 343 |
| Zone 3 Temperature (°C) | 350 | 350 | 350 | 343 |
| Zone 4 Temperature (°C) | 355 | 351 | 355 | 351 |
| Zone 5 Temperature (°C) | 360 | 361 | 360 | 362 |
| Zone 6 Temperature (°C) | 365 | 368 | 365 | 367 |
| Zone 7 Temperature (°C) | 365 | 367 | 365 | 367 |
| Die Temperature (°C) | 370 | 370 | 370 | 370 |
| Melt Temperature (°C) | --- | 363 | --- | 365 |
| Die Melt Pressure (psi) | --- | 420 | --- | 330 |
| Screw Speed (RPM) | 200 | 200 | 200 | 200 |
| Amp Draw | --- | 7 | --- | 8 |
| Main Feed (lb/hr) | 17.5 | 17.5 | 21.0 | 21.0 |
| Fiberglass Feed (lb/hr) | 7.5 | 7.5 | 9.0 | 9.0 |
| Vacuum (in Hg) | | 23 | --- | 23 |

The mechanical properties were tested for the compositions of Example 3 and Comparative Example 1 according to the methods outlined in Table 2 and the results for the two compositions are summarized and compared in Table 6. As can be seen in Table 6, the composition with the phenoxy polymer has higher tensile strength, tensile elongation, flexural strength, flexural strain, notched Izod impact, and unnotched Izod impact.

**Table 6**

| Mechanical properties of Compositions of Example 3 and Comparative Example 1. | | |
|---|---|---|
| | Example 3 | Comparative Example 1 |
| Weight % Phenoxy Polymer Used in Formulation | 10.0 | 0 |

| Properties | | |
|---|---|---|
| Tensile Strength (psi) | 20,300 | 15,900 |
| Tensile Modulus (Ksi) | 1,400 | 1,440 |
| Tensile Elongation at Break (%) | 2.2 | 1.7 |
| Flexural Strength (psi) | 27,400 | 20,600 |
| Flexural Modulus (Ksi) | 1,270 | 1,320 |
| Flexural Strain at Break (%) | 2.3 | 1.7 |
| Notched Izod (ft-lb/in) | 1.6 | 0.8 |
| Unnotched Izod (ft-lb/in) | 12.2 | 5.2 |
| Heat Deflection Temperature (°C) | 161 | 178 |

### Example 4 and Control 2

A composition similar to that of Example 3 was prepared according to another embodiment of the present invention. This composition is shown in Table 7 and it was produced using procedures similar to those used to produce the compositions of Examples 1 and 2. Control 2 is a 30% glass reinforced UDEL^{®} polysulfone resin available commercially from Solvay Advanced Polymers as UDEL^{®} GF-130 NT and is included herein for reference as another illustration of the improvement in performance for compositions of this invention over the prior art. The mechanical properties of the compositions of Example 4 are shown in Table 8 and are contrasted against those for commercially available glass reinforced polysulfone prepared without the use of the phenoxy polymer.

**Table 7**

| Composition of Example 4. | |
|---|---|
| Component | Wt % |
| UDEL^{®} Polysulfone | 57.7 |
| CERTAINTEED^{®} 910 Chopped Fiberglass | 29.1 |
| KADOX^{®} 911Zinc Oxide | 0.24 |
| PHENOXY PKFE^{™} Bisphenol A Phenoxy Polymer | 10.0 |
| Carbon Black Concentrate* | 2.96 |

| | |
|---|---|
| * Carbon Black Concentrate is polysulfone into which 13.7 % by weight RAVEN^{®} 3500 carbon black has been precompounded. | |

**Table 8**

| Mechanical properties of Compositions of Example 4 and Control 2. | | |
|---|---|---|
| | Example 4 | Control 2 |
| Weight % Phenoxy Polymer Used in Formulation | 10.0 | 0 |

| Properties | | |
|---|---|---|
| Tensile Strength (psi) | 20,500 | 16,300 |
| Tensile Modulus (Ksi) | 1,340 | 1,410 |
| Tensile Elongation at Break (%) | 2.6 | 1.7 |
| Flexural Strength (psi) | 28,900 | 21,100 |
| Flexural Modulus (Ksi) | 1,250 | 1,250 |
| Flexural Strain at Break (%) | 2.6 | 1.8 |
| Notched Izod (ft-lb/in) | 1.8 | 0.9 |
| Unnotched Izod (ft-lb/in) | 13.5 | 7 |
| Heat Deflection Temperature (°C) | 163 | 180 |

The comparison in properties between umnodified 30% fiberglass-reinforced UDEL^{®} GF-130 NT and Example 3 illustrates the dramatic improvement in tensile strength, flexural strength, and Izod impact properties resulting from the addition of the phenoxy polymer. The property data comparisons from all the foregoing examples clearly illustrate that compositions prepared according to this invention reproducibly and consistently offer significantly improved strength, elongation, and impact resistance performance over the state of the art.

The compositions of the present invention, may optionally include reinforcing filler, pigments, additives, and like. Representative fibers which may serve as reinforcing media include asbestos, graphitic carbon fibers, amorphous carbon fibers, synthetic polymeric fibers, aluminum fibers, aluminum silicate fibers, oxide of metals such as aluminum fibers, titanium fibers, magnesium fibers, wollastonite, rock wool fibers, steel fibers, tungsten fibers, silicon carbide fibers, alumina fibers, boron fibers, etc. Representative filler and other materials include glass, calcium silicate, silica, clays, such as kaolin, talc, chalk, mica, potassium titanate, and other mineral fillers; pigments such as carbon black, titanium dioxide, zinc oxide, such as KADOX^{®} 911, available from Zinc Corporation of America, iron oxide, cadmium red, iron blue; and other additives such as alumina trihydrate, sodium aluminum carbonate, barium ferrite, etc. Suitable polymeric fibers include fibers formed from high temperature engineering polymers such as, for example, poly(benzothiazole), poly(benzimidazole), polyarylates, poly(benzoxazole), polyaryl ethers and the like, and may include mixtures comprising two or more such fibers. The compositions of this invention may further include additional additives commonly employed in the art, such as thermal stabilizers, ultraviolet light stabilizers, oxidative stabilizers, plasticizers, lubricants, and mold release agents, such as polytetrafluoroethylene (PTFE) powder, and the like. A suitable PTFE powder is POLYMIST^{®} 5A, available from Solvay Solexis. A suitable carbon black is RAVEN^{®} 3500 carbon black, available from Columbian Chemicals Company. Other commercially available carbon blacks include SHAWINIGAN BLACK^{®}, available from Chevron Phillips Chemical Company; and BLACK PEARLS^{®}, MONARCH^{®}, and REGAL^{®} carbon blacks, all available from Cabot Corporation. The levels of such additives will be determined for the particular use envisioned, with up to about 50 weight %, based on the total weight of the composition, of such additional additives considered to be within the range of ordinary practice in the extrusion art.

Additional embodiments of the present invention include melt fabricated, injection molded, extruded, thermoformed, or blow-molded articles made from any of the polymer compositions described herein.

The embodiments illustrated in the instant disclosure are for illustrative purposes. They should not be construed to limit the scope of the claims. As is clear to one of ordinary skill in this art, the instant disclosure encompasses a wide variety of embodiments not specifically illustrated herein.

## Claims

1. Method for the preparation of a polymer composition substantially free of polyamide, said method comprising the step of blending at least one phenoxy polymer with :
- at least one aromatic polycondensation polymer selected from polysulfone, polyphenylsulfone, polyethersulfone, polyetherethersulfone, and copolymers and mixtures thereof, and
- glass.

2. Method according to claim 1, **characterized in that** the polymer composition is prepared by melt compounding techniques using an extruder.

3. Method according to claim 2, **characterized in that** :
- the polymer composition comprises ingredients, in particular the aromatic polycondensation polymer, the phenoxy polymer and the glass ;
- the extruder is a twin-screw extruder fitted with a hopper and a gravimetric feeder ;
and,
- the ingredients of the polymer composition except the glass are dry-blended, and then fed to the hopper of the extruder ;
- the glass is side-fed using the gravimetric feeder, and it is metered at the appropriate rate to achieve the target glass loading ;
- the ingredients of the polymer composition are melt compounded in the extruder.

4. Method according to claim 3, **characterized in that** :
- molten strands are formed from the melt compounded ingredients;
- said molten strands are cooled in a water bath, then cut in a pelletizer to form pellets.

5. Method according to claim anyone of the preceding claims, **characterized in that** the aromatic polycondensation polymer is a polysulfone.

6. Method according to anyone of the preceding claims, **characterized in that** the polymer composition comprises the aromatic polycondensation polymer and the phenoxy polymer as the sole polymer components of the polymer composition.

7. Method according to anyone of the preceding claims, **characterized in that** the phenoxy polymer is 4,4'-isopropylidenediphenol phenoxy polymer.

8. Method according to anyone of the preceding claims, **characterized in that** the phenoxy polymer is present in the polymer composition at a concentration of from 1 to 30 weight % based on the total weight of the polymer composition.

9. Method according to claim 8, **characterized in that** the phenoxy polymer is present in the polymer composition at a concentration of from 2 to 15 weight % based on the total weight of the polymer composition.

10. Method according to anyone of the preceding claims, **characterized in that** the glass is present in the polymer composition at a concentration of from 10 to 50 weight % based on the total weight of the polymer composition.

11. Method according to anyone of the preceding claims, **characterized in that** the glass is a glass fiber.

12. Method according to claim 1, **characterized in that** the glass is CERTAINTEED^{®} 910 fiberglass.

13. Method according to claim 1, **characterized in that** the phenoxy polymer is PHENOXY PKFE^{™} bisphenol A phenoxy polymer.

14. Method according to claim 1, **characterized in that** the glass is CERTAINTEED^{®} 910 fiberglass and the phenoxy polymer is PHENOXY PKFE^{™} bisphenol A phenoxy polymer.

15. Melt fabricated article made from the polymer composition prepared by the method according to anyone of the preceding claims, which is chosen from injection molded articles, extruded articles, thermoformed articles and blow-molded articles.

## Patentansprüche

1. Verfahren zur Herstellung einer im wesentlichen polyamid-freien Polymerzusammensetzung, welches Verfahren den Schritt des Mischens von wenigstens einem Phenoxypolmer mit :
- wenigstens einem aromatischen Polykondensationspolymer, ausgewählt aus Polysulfon, Polyphenylsulfon, Polyethersulfon, Polyetherethersulfon, und Copolymeren und Mischungen davon, und
- Glas
umfasst.

2. Verfahren nach Anspruch 1, **dadurch gekennzeichnet, dass** die Polymerzusammensetzung mittels Schmelzecompoundierverfahren, unter Verwenden eines Extruders, hergestellt wird.

3. Verfahren nach Anspruch 2, **dadurch gekennzeichnet, dass** :
- die Polymerzusammensetzung Bestandteile, insbesondere das aromatische Polykondensationspolymer, das Phenoxypolymer und das Glas, umfasst;
- der Extruder ein Zweischneckenextruder ist, welcher mit einem Einfülltrichter und einer gravimetrischen Dosiervorrichtung versehen ist;
und
- die Bestandteile der Polymerzusammensetzung, mit Ausnahme des Glases, trockengemischt, und dann in den Einfülltrichter des Extruders eingebracht werden;
- das Glas unter Verwenden der gravimetrischen Dosiervorrichtung seiteneingespeist wird, und mit einer geeigneten Geschwindigkeit, um die Glaszuschlags-Vorgabe zu erreichen, dosiert wird;
- die Bestandteile der Polymerzusammensetzung im Extruder schmelzecompoundiert werden.

4. Verfahren nach Anspruch 3, **dadurch gekennzeichnet, dass** :
- aus den schmelzecompoundierten Bestandteilen geschmolzene Stränge gebildet werden;
- die geschmolzenen Stränge in einem Wasserbad gekühlt werden, dann, um Pellets zu bilden, in einem Pelletierer geschnitten werden.

5. Verfahren nach einem der vorstehenden Ansprüche, **dadurch gekennzeichnet, dass** das aromatische Polykondensationspolymer ein Polysulfon ist.

6. Verfahren nach einem der vorstehenden Ansprüche, **dadurch gekennzeichnet, dass** die Polymerzusammensetzung das aromatische Polykondensationspolymer und das Phenoxypolymer als alleinige Polymerkomponenten der Polymerzusammensetzung umfasst.

7. Verfahren nach einem der vorstehenden Ansprüche, **dadurch gekennzeichnet, dass** das Phenoxypolymer 4,4'-Isopropylidendiphenolphenoxypolymer ist.

8. Verfahren nach einem der vorstehenden Ansprüche, **dadurch gekennzeichnet, dass** das Phenoxypolymer in der Polymerzusammensetzung in einer Konzentration von 1 bis 30 Gew.-%, bezogen auf das Gesamtgewicht der Polymerzusammensetzung, vorhanden ist.

9. Verfahren nach Anspruch 8, **dadurch gekennzeichnet, dass** das Phenoxypolymer in der Polymerzusammensetzung in einer Konzentration von 2 bis 15 Gew.-%, bezogen auf das Gesamtgewicht der Polymerzusammensetzung, vorhanden ist.

10. Verfahren nach einem der vorstehenden Ansprüche, **dadurch gekennzeichnet, dass** das Glas in der Polymerzusammensetzung in einer Konzentration von 10 bis 50 Gew.-%, bezogen auf das Gesamtgewicht der Polymerzusammensetzung, vorhanden ist.

11. Verfahren nach einem der vorstehenden Ansprüche, **dadurch gekennzeichnet, dass** das Glas eine Glasfaser ist.

12. Verfahren nach Anspruch 1, **dadurch gekennzeichnet, dass** das Glas CERTAINTEED^{®}910-Fiberglas ist.

13. Verfahren nach Anspruch 1, **dadurch gekennzeichnet, dass** das Phenoxypolymer PHENOXY PKFE^{™} Bisphenol-A-phenoxypolymer ist.

14. Verfahren nach Anspruch 1, **dadurch gekennzeichnet, dass** das Glas CERTAINTEED^{®}910-Fiberglas ist und das Phenoxypolymer PHENOXY PKFE^{™} Bisphenol-A-phenoxypolymer ist.

15. Schmelze-gefertigter Gegenstand, aus der mit dem Verfahren nach einem der vorstehenden Ansprüche hergestellten Polymerzusammensetzung, welcher aus Spritzgußgegenständen extrudierten Gegenständen, warmgeformten Gegenständen und blasgeformten Gegenständen ausgewählt ist.

## Revendications

1. Procédé pour la préparation d'une composition polymère essentiellement exempte de polyamide, ledit procédé comprenant l'étape de mélange d'au moins un polymère phénoxy avec :
- au moins un polymère de polycondensation aromatique choisi parmi la polysulfone, la polyphénylsulfone, la polyéthersulfone, la polyétheréthersulfone, ainsi que leurs copolymères et leurs mélanges, et
- du verre.

2. Procédé selon la revendication 1, **caractérisé en ce que** la composition polymère est préparée par des techniques de mélange en fusion en utilisant une extrudeuse.

3. Procédé selon la revendication 2, **caractérisé en ce que**:
- la composition polymère comprend des ingrédients, en particulier le polymère de polycondensation aromatique, le polymère phénoxy et le verre ;
- l'extrudeuse est une extrudeuse à double vis sans fin équipée d'une trémie et d'un dispositif d'alimentation gravimétrique ;
et,
- les ingrédients de la composition polymère, à l'exception du verre, sont mélangés par voie sèche avant d'être acheminés à la trémie de l'extrudeuse;
- le verre est alimenté latéralement en utilisant le dispositif d'alimentation gravimétrique et est dosé au débit approprié pour obtenir la charge de verre cible ;
- les ingrédients de la composition polymère sont soumis à un mélange en fusion dans l'extrudeuse.

4. Procédé selon la revendication 3, **caractérisé en ce que** :
- on forme des cordons à l'état fondu à partir des ingrédients soumis à un mélange en fusion ;
- lesdits cordons à l'état fondu sont refroidis dans un bain d'eau, avant d'être découpés dans un dispositif de granulation pour obtenir des granulés.

5. Procédé selon l'une quelconque des revendications précédentes, **caractérisé en ce que** le polymère de polycondensation aromatique est une polysulfone.

6. Procédé selon l'une quelconque des revendications précédentes, **caractérisé en ce que** la composition polymère comprend le polymère de polycondensation aromatique et le polymère phénoxy à titre de composants polymères uniques de la composition polymère.

7. Procédé selon l'une quelconque des revendications précédentes, **caractérisé en ce que** le polymère phénoxy est le polymère phénoxy de 4,4'-isopropylidènediphénol.

8. Procédé selon l'une quelconque des revendications précédentes, **caractérisé en ce que** le polymère phénoxy est présent dans la composition polymère à une concentration de 1 à 30 % en poids, basés sur le poids total de la composition polymère.

9. Procédé selon la revendication 8, **caractérisé en ce que** le polymère phénoxy est présent dans la composition polymère à une concentration de 2 à 15 % en poids, basés sur le poids total de la composition polymère.

10. Procédé selon l'une quelconque des revendications précédentes, **caractérisé en ce que** le verre est présent dans la composition polymère à une concentration de 10 à 50 % en poids, basés sur le poids total de la composition polymère.

11. Procédé selon l'une quelconque des revendications précédentes, **caractérisé en ce que** le verre est une fibre de verre.

12. Procédé selon la revendication 1, **caractérisé en ce que** le verre est la fibre de verre CERTAINTEED^{®} 910.

13. Procédé selon la revendication 1, **caractérisé en ce que** le polymère phénoxy est le polymère phénoxy de bisphénol A PHENOXY PKFE^{™}.

14. Procédé selon la revendication 1, **caractérisé en ce que** le verre est la fibre de verre CERTAINTEED^{®} 910 et le polymère phénoxy est le polymère phénoxy de bisphénol A PHENOXY PKFE^{™}.

15. Article fabriqué en fusion, réalisé à partir de la composition polymère préparée via le procédé selon l'une quelconque des revendications précédentes, qui est choisi parmi des articles moulés par injection, des articles extrudés, des articles thermoformés et des articles obtenus par extrusion-soufflage.
